# EUROPÄISCHE PATENTSCHRIFT

(11) **EP 3 548 784 B1**
(45) Veröffentlichungstag und Bekanntmachung des Hinweises auf die Patenterteilung: **20.10.2021**
(21) Anmeldenummer: 17804908.6
(22) Anmeldetag: 29.11.2017
(51) Int. Cl.: F16L 23/08

(54) **PROFILSCHELLE**
PROFILED CLAMP
COLLIER PROFILÉ

(30) Priorität: 02.12.2016 DE 102016123388
(43) Veröffentlichungstag der Anmeldung: 09.10.2019
(73) Patentinhaber: NORMA Germany GmbH, 63277 Maintal (DE)
(72) Erfinder: GHIRARDI, Fabio, 63450 Hanau (DE); STOLL, Viktor, 63538 Grosskrotzenburg (DE); VON BREITENBACH, Gerrit, 63791 Karlstein (DE); BAUDOIN, Manuel, Newbury, Berkshire RG14 7QD (GB); GEESE, Brian, Lake Orion, MI 48360 (US)
(74) Vertreter: Patentanwälte Olbricht Buchhold Keulertz
(86) Internationale Anmeldenummer: PCT/EP2017/080755
(87) Internationale Veröffentlichungsnummer: WO 2018/099940

(56) Entgegenhaltungen:
- US-A1- 2004 216 284
- US-A1- 2005 039 306
- US-A1- 2008 184 536
- US-A1- 2010 115 733
- US-A1- 2010 223 764

## Beschreibung

Die Erfindung betrifft eine Profilschelle gemäß dem Oberbegriff von Anspruch 1. US 2004/216284 A1, US 2008/184536 A1 und US 2010/223764 offenbaren jeweils eine solche Profilschelle.

Profilschellen werden vielfach zum Verbinden von Rohrleitungen verwendet. Die Profilschelle wird mit einem Spannband über die Rohrleitung geschoben. Anschließend werden die Spannköpfe der Profilschelle durch Spannen der Spanneinrichtung aufeinander zu bewegt, wodurch der Innendurchmesser bzw. der Aufnahmeraum der Profilschelle verringert und eine radial nach innen gerichtete Spannkraft auf die Rohrleitung ausgeübt wird. Die Rohrleitung kann dadurch an einer weiteren Rohrleitung oder an einem Spannkopf geklemmt werden.

Die Profilschelle hat ein im Wesentlichen U-förmiges Spannband. Die zu verbindenden Leitungen haben einen radial abstehenden, umlaufenden Flansch. Die Profilschelle wird zum Verbinden der Leitungen so positioniert, dass die Flansche der Leitungen in das U-förmige Spannband ragen. Die Schenkel des U-förmigen Spannbandes verlaufen schräg, so dass beim Spannen des Spannbandes zusätzlich zur radial wirkenden Spannkraft eine bezüglich der Leitungen axiale Spannkraft auf die Flansche ausgeübt wird, durch die die Flansche gegeneinander gedrückt werden, so dass diese aneinander anliegen, wodurch eine Abdichtung zwischen den Leitungen erfolgt.

Durch die von der Spanneinrichtung auf die Spannköpfe ausgeübten Kräfte treten innerhalb des Spannbandes Spannungen auf, die nachteilige Einflüsse auf die Dauerhaltbarkeit haben. Insbesondere bei größeren Temperaturunterschieden können dadurch die von der Profilschelle bereitgestellten Haltekräfte negativ beeinflusst werden.

Aufgabe der Erfindung ist es, eine Profilschelle mit einer verbesserten Spannungsverteilung innerhalb des Spannbandes, insbesondere bei Temperaturänderungen, bereitzustellen.

Hauptmerkmale der Erfindung sind im kennzeichnenden Teil von Anspruch 1 angegeben. Ausgestaltungen sind Gegenstand der Ansprüche 2 bis 11.

Bei einer Profilschelle mit einem Spannband und einer Spanneinrichtung, wobei das Spannband an den Enden jeweils einen bezüglich eines von der Profilschelle definierten Aufnahmeraums im Wesentlichen radial abstehenden Spannkopf mit jeweils einer Öffnung aufweist, und wobei die Spanneinrichtung zwei Spannteile sowie ein längliches, die Spannteile verbindendes Spannelement aufweist, wobei sich das Spannelement durch die Öffnungen der Spannköpfe erstreckt und die Spannteile gegen die Spannköpfe drückt, ist vorgesehen, dass die Profilschelle Zwischenelemente aufweist, die zwischen den Spannköpfen und den Spannteilen vorgesehen sind, wobei die Zwischenelemente Ausnehmungen aufweisen, durch die sich das Spannelement erstreckt, sowie eine Anlegefläche zur Anlage an den Spannkopf, wobei die Anlegefläche derart ausgebildet ist, dass der Anlegepunkt zwischen dem Zwischenelement und dem Spannkopf zumindest in einer Spannposition, in der die Spannköpfe parallel zueinander oder zueinander geneigt sind, jeweils in radialer Richtung näher am Aufnahmeraum liegt als die Mittelachse des Spannelements.

In der Spannposition werden die Spannköpfe durch die Spanneinrichtung so gegeneinander gedrückt, dass das Spannband umlaufend an einer oder mehreren Rohrleitungen anliegt.

Da der Anlegepunkt, also der Angriffspunkt der Spanneinrichtung an den Spannköpfen, näher am Aufnahmeraum liegt als die Mittelachse des Spannelements, werden unerwünschte Spannungen in den Spannköpfen vermieden oder zumindest reduziert, da der Hebelarm zwischen Anlegepunkt und einem jeweils am Übergang zwischen den Spannköpfen und dem Spannband vorgesehenen Fußpunkt der Spannköpfe deutlich kürzer ist. Dadurch kommt es beim Spannen der Spanneinrichtung zu geringeren Verformungen der Spannköpfe, so dass eine effektivere Einleitung der Spannkräfte in das Spannband möglich ist.

Durch die Zwischenelemente kann zudem der Angriffspunkt der Spanneinrichtung unabhängig von der Form der Spanneinrichtung näher an den Fußpunkt verlegt werden. Insbesondere ist durch die Auswahl geeigneter Zwischenelemente die Verwendung verschiedener Spanneinrichtungen möglich, so dass eine flexible Anpassung der Profilschelle möglich ist. Unabhängig von der ausgewählten Spanneinrichtung können die Zwischenelemente jeweils so gewählt werden, dass der Anlegepunkt zwischen den Zwischenelementen und dem Spannköpfen jeweils radial näher am Fußpunkt des jeweiligen Spannkopfes liegt als die Mittelachse des Spannelements. Da die Anpassung an die Spanneinrichtung über die Zwischenelemente erfolgt, können zudem die Spannköpfe symmetrisch ausgebildet sein, so dass eine Ausrichtung der Profilschelle, beispielsweise für eine Betätigung der Spanneinrichtung, nicht erforderlich ist. Diese kann nach der Vormontage der Profilschelle in beliebiger Ausrichtung an den Spannköpfen montiert werden.

Das Spannband ist beispielsweise um den Aufnahmeraum gekrümmt und die Spannköpfe weisen jeweils einen unmittelbar an das jeweilige Ende des Spannbandes anschließenden, gegenläufig zur Krümmung des Spannbandes gekrümmten Abschnitt auf, wobei die Anlegepunkte jeweils am gekrümmten Abschnitt der Spannköpfe liegen.

Die Zwischenelemente können eine abgerundete Anlegefläche aufweisen, so dass auch bei einer Verformung des Spannkopfes oder einer Veränderung der Position der Spannköpfe, beispielsweise beim Zusammenziehen der Spannköpfe durch die Spanneinrichtung, der Anlegepunkt in radialer Richtung unterhalb der Mittelachse des Spannelements liegt. Insbesondere ist die Anlegefläche konvex gewölbt. Insbesondere ist die Krümmung der Anlegeflächen kleiner ist als die Krümmung der gekrümmten Abschnitte der Spannköpfe.

Die Anlegeflächen weisen auch jeweils einen in Umfangsrichtung vorstehenden Vorsprung auf, wobei der Vorsprung jeweils in radialer Richtung weiter innen als die Öffnung des Spannkopfes vorgesehen ist. Durch den Vorsprung kann der Anlegepunkt weitestgehend unabhängig von der Ausrichtung der Spannköpfe gewählt werden. Vorzugsweise ist der Vorsprung so gewählt, dass auch bei voneinander weg oder aufeinander zu geneigten Spannköpfen ausschließlich der Vorsprung am jeweiligen Spannkopf anliegt. Beispielsweise ist das Zwischenelement aus einem Blech hergestellt und der Vorsprung ist durch Prägen oder Stanzen aus dem Blech heraus gebogen.

An den Zwischenelementen und den Spannköpfen sind vorzugsweise zusammenwirkende Halteelemente vorgesehen, die die Zwischenelemente in radialer Richtung und in einer Drehrichtung um die Längsachse des Spannelements festlegen. Sind die Spannköpfe nicht parallel zueinander ausgerichtet, kann die Spanneinrichtung beim Spannen zu den enger zusammenliegenden Enden der Spannköpfe gedrängt werden. Sind die Spannköpfe beispielsweise aufeinander zu geneigt, könnte die Spanneinrichtung beim Spannen radial nach außen wandern. Dadurch würde der Hebelarm vergrößert, wodurch es zu höheren Spannungen im Spannband kommen könnte. Des Weiteren könnte die Spanneinrichtung gegen den Rand der jeweiligen Öffnung gedrängt werden, wodurch es zu einer Belastung des Materials der Spannköpfe in diesen Bereichen kommen könnte. Durch die Halteelemente sind die Zwischenelemente und somit auch die Spanneinrichtung in radialer Richtung festgelegt, so dass eine erhöhte Beanspruchung der Spannköpfe vermieden wird. Durch die drehfeste Fixierung ist zudem sichergestellt, dass die Zwischenelemente stets die gewünschte Ausrichtung an den Spannköpfen haben. Beispielsweise kann auch ein Teil der Spanneinrichtung an einem der Zwischenelemente und somit an einem Spannkopf drehfest fixiert werden.

Die Halteelemente können beispielsweise jeweils durch zumindest eine Ausnehmung am Zwischenelement oder am Spannkopf und zumindest einen am Spannkopf oder dem Zwischenelement vorgesehenen Vorsprung, der in die Ausnehmung ragt, gebildet sein. Insbesondere ragt der Vorsprung bezüglich des Aufnahmeraums in Umfangsrichtung vor und die Ausnehmung ist in Umfangsrichtung offen. Die Zwischenelemente können auf einfache Weise durch Aufschieben der Ausnehmung auf den Vorsprung festgelegt werden.

Beispielsweise ist der Vorsprung aus dem Spannkopf oder dem Zwischenelement herausgebogen, insbesondere gestanzt, wodurch eine einfache Herstellung des Vorsprunges möglich ist.

Das Zwischenelement weist vorzugsweise eine Aufnahme für einen Füllkörper oder ein Spannteil der Spanneinrichtung auf. Der Füllkörper kann beispielsweise eine Stützfunktion für das Zwischenelement aufweisen oder eine Anlage für ein Spannteil bereitstellen, die ein flächiges Anlegen des Spannteils am Füllkörper und somit am Zwischenelement ermöglicht. Der Füllkörper wird in der Aufnahme in einer gewünschten Orientierung gehalten. Wird ein Spannteil in der Aufnahme gehalten, kann dieses so gehalten werden, so dass ein Verbinden mit dem Spannelement sowie ein Spannen der Spanneinrichtung möglich ist. Beispielsweise ist das Spannteil eine Mutter mit einem Innengewinde, die in der Aufnahme in Umfangsrichtung, in radialer Richtung sowie in Drehrichtung um die Längsachse des Spannelements gehalten wird.

Beispielsweise kann in einer Aufnahme ein Spannteil mit einem Innengewinde und in der zweiten Aufnahme ein Füllkörper mit einer zylindrischen Ausnehmung vorgesehen sein. Der Füllkörper kann eine ebene Anlage für einen Kopf des Spannelements, beispielsweise einen Schraubenkopf, bereitstellen. Das andere Zwischenelement fixiert das als Mutter ausgebildete Spannteil. Somit kann die Spanneinrichtung einfach am Spannband montiert werden.

Das Zwischenelement kann die Aufnahme auch in einer Umfangsrichtung umschließen und somit eine Anlage für ein Spannteil aufweisen.

Vorzugsweise sind die Spannköpfe zueinander geneigt ausgebildet.

An den an radial äußeren Enden der Spannköpfe können einander gegenüberliegende Kontaktflächen vorgesehen sein, die beim Zusammenziehen der Spannköpfe miteinander in Anlage gelangen.

Die Spannköpfe und das Spannband können jeweils zumindest abschnittsweise einen U-förmigen Querschnitt aufweisen. Der U-förmige Querschnitt kann von ebenen Abschnitten unterbrochen sein, um die Flexibilität des Spannbandes zu erhöhen.

Der U-förmige Querschnitt kann sich im Bereich des Spannkopfes in radialer Richtung und/oder im Bereich des Schellenbandes in Umfangsrichtung verändern. Beispielsweise kann der Querschnitt an die zu erwartenden Belastungen angepasst werden. Der Querschnitt kann beispielsweise durch Anpassung der Länge, der Dicke oder der Form der Basis und/oder der Schenkel des U-förmigen Querschnitts angepasst werden. Alternativ kann der Winkel zwischen den Schenkel und der Basis verändert werden. Der Querschnitt kann abschnittsweise unterschiedlich sein oder sich kontinuierlich ändern.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Spannband einer erfindungsgemäßen Profilschelle;
- Fig. 2: eine schematische Darstellung einer Rohrleitungsbaugruppe mit einer Profilschelle;
- Fig. 3: eine Detailansicht des Spannkopfes der Profilschelle aus Fig. 1;
- Fig. 4: eine zweite Detailansicht des Spannkopfes der Profilschelle aus Fig. 1;
- Fig. 5: eine erste Ausführungsform eines Zwischenelements zur Verwendung mit dem Spannband aus den Fig. 3 und 4;
- Fig. 6: Eine Teilansicht einer Profilschelle mit dem Spannband aus Fig. 1 und dem Zwischenelement aus Figur 5;
- Fig. 7: eine zweite Ausführungsform eines Zwischenelements zur Verwendung mit dem Spannband aus Fig. 1; und
- Fig. 8: eine Teilansicht einer Profilschelle mit dem Spannband aus Fig. 1 und dem Zwischenelement aus Fig. 7;
- Fig. 9a bis 9e: Schnittansichten durch die Profilschelle in den Schnitten a-a bis e-e aus Fig. 1;
- Fig. 10: eine zweite Ausführungsform einer Profilschelle; und
- Fig. 11a und 11b: Detailansichten des Spannkopfes der Profilschelle aus Fig. 10.

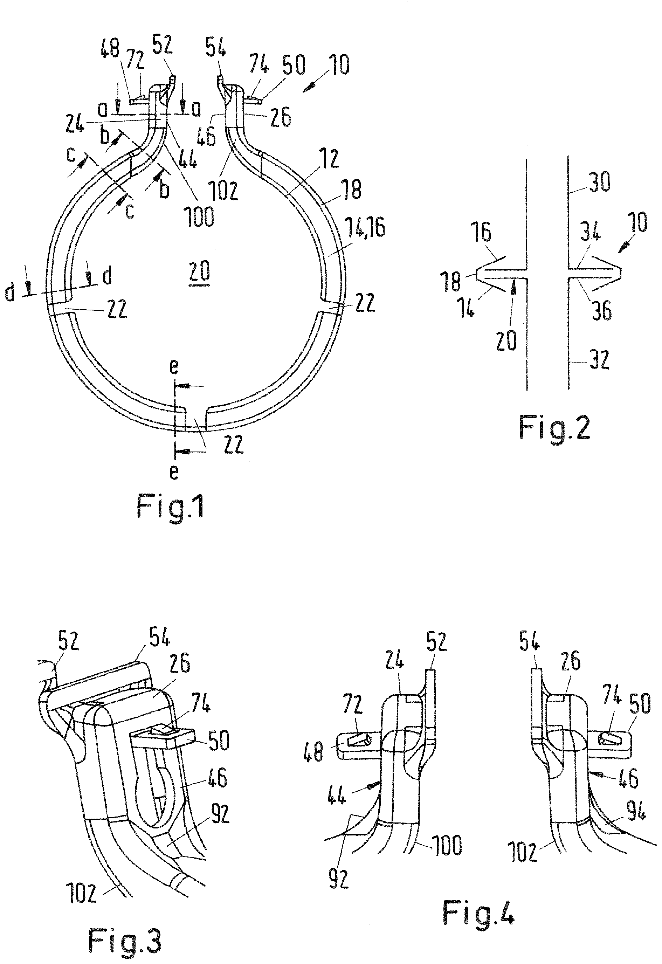

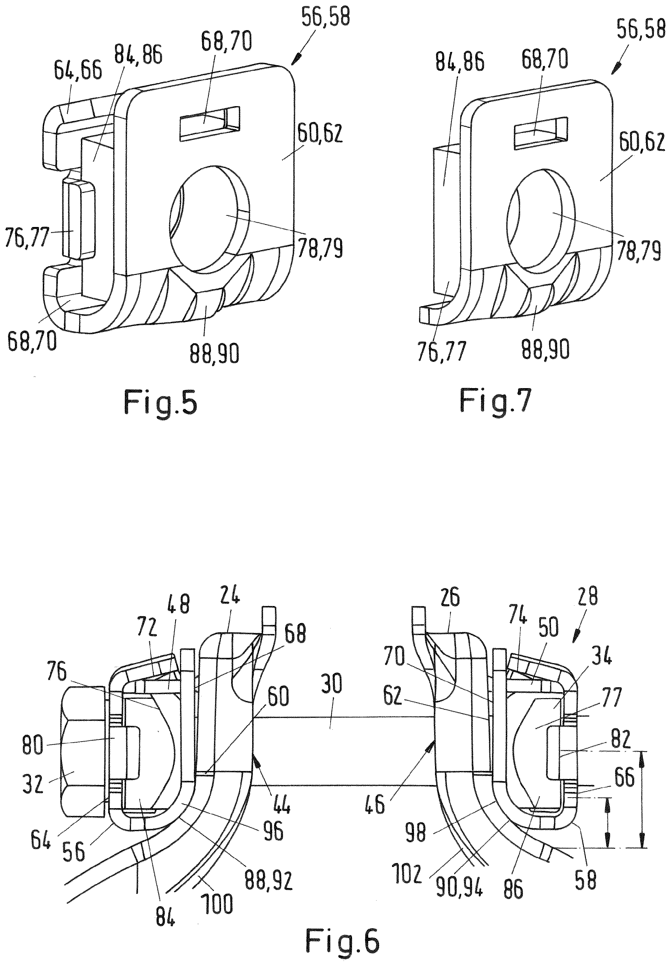

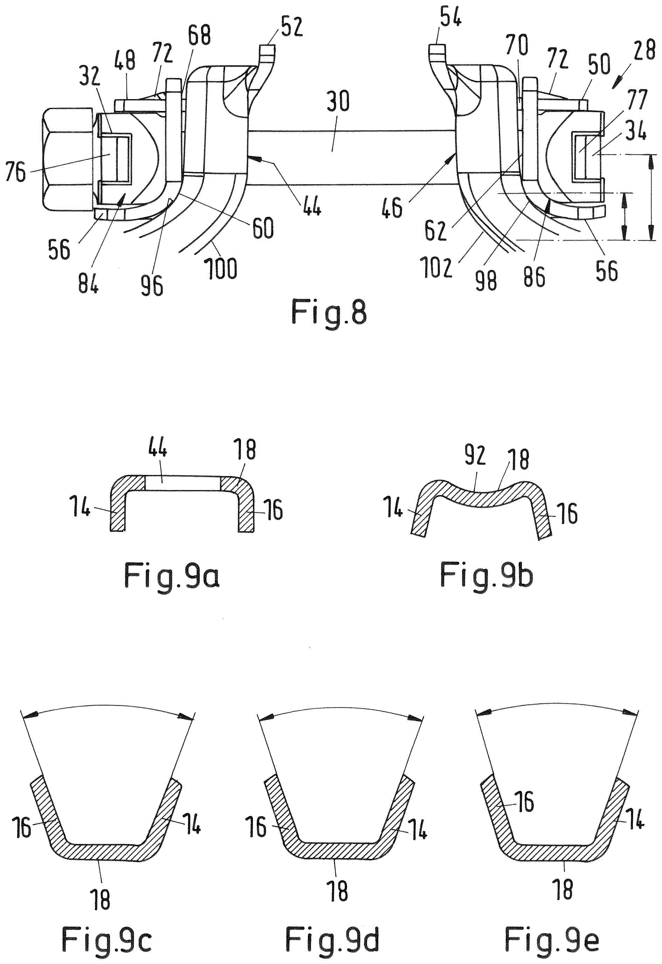

In Figur 1 ist ein Spannband 12 einer Profilschelle 10 gezeigt. Das Spannband 12 hat einen im Wesentlichen U-förmigen Querschnitt mit zwei relativ zueinander geneigten Schenkel 14, 16 sowie einem Verbindungsbereich 18 (siehe auch Figur 2) und begrenzt einen Aufnahmeraum 20. Die Schenkel 14, 16 weisen mehrere Unterbrechungen 22 auf, so dass das Spannband 12 flexibler ausgebildet ist. Des Weiteren weist das Spannband 12 zwei bezüglich des Aufnahmeraums 20 radial abstehende Spannköpfe 24, 26 auf, an welchen eine Spanneinrichtung 28 (siehe Figuren 6 und 8) zum Spannen des Spannbandes 12 angreifen kann.

Die Spanneinrichtung 28 weist ein Spannelement 30 sowie zwei Spannteile 32, 34 auf, die durch das Spannelement 30 aufeinander zu bewegt werden können, wodurch die Spannköpfe 24, 26 gegeneinander gedrückt werden können.

Die Profilschelle 10 dient zum Verbinden von zwei Leitungen 36, 38 (siehe Figur 2), die jeweils an einem Ende einen radial abstehenden Flansch 40, 42 aufweisen. Die Leitungen 36, 38 werden mit den Flansche 40, 42 aneinander angelegt und die Profilschelle 10 über die beiden Flansche 40, 42 gelegt, so dass sich die Flansche 40, 42 im Aufnahmeraum 20 befinden. Anschließend wird das Spannband 12 mit der Spanneinrichtung 28 so gespannt, dass die Schenkel 14, 16 an den Flanschen 40, 42 anliegen und diese gegeneinander drücken.

Die Spannköpfe 24, 26 sind symmetrisch aufgebaut und weisen jeweils zumindest abschnittsweise einen U-förmigen Querschnitt auf. An jedem Spannkopf 24, 26 ist eine Öffnung 44, 46 vorgesehen, durch die sich das Spannelement 30 der Spanneinrichtung 28 erstrecken kann.

An den Spannköpfen 24, 26 sind des Weiteren jeweils auf den einander abgewandten Seiten in Umfangsrichtung U des Spannbandes 12 abstehende Vorsprünge 48, 50 vorgesehen, die jeweils aus dem Blech des Spannkopfes 24, 26 herausgebogen sind. An den radial äußeren Enden der einander zugewandten Flächen weisen die Spannköpfe jeweils eine Kontaktfläche 52, 54 auf, wobei sich die Kontaktflächen 52, 54 so gegenüberliegen, dass diese beim Spannen des Spannbandes 12 aneinander anliegen können.

Die Profilschelle 10 weist des Weiteren Zwischenelemente 56, 58 auf, die zwischen den Spannköpfen 24, 26 und den Spannteilen 32, 34 angeordnet sind. Die Zwischenelemente 56, 58 sind jeweils aus einem Blech durch Umbiegen gebildet und weisen eine Anlegefläche 60, 62 zur Anlage an den Spannköpfen 24, 26 sowie eine auf einer entgegengesetzten Fläche angeordnete Anlage 64, 66 auf. An der Anlage 64 kann, wie im Folgenden erläutert wird, ein Spannteil 32 angelegt werden.

An den Anlegeflächen 60, 62 sind Ausnehmungen 68, 70 vorgesehen, mit welchen die Zwischenelemente 56, 58 auf die Vorsprünge 48, 50 an den Spannköpfen 24, 26 aufgeschoben werden können. An den Vorsprüngen 48, 50 sind jeweils Rastelemente 72, 74 vorgesehen, die jeweils in der Ausnehmung 68, 70 verrasten und ein Abrutschen des Zwischenelements 56, 58 vom Vorsprung 48, 50 verhindern. Die Vorsprünge 48, 50 und die Ausnehmungen 68, 70 bilden jeweils zusammenwirkende Halteelemente, die das Zwischenelement 56, 58 jeweils in radialer Richtung und in einer Drehrichtung um das Spannelement am Spannkopf 24, 26 festlegen.

Die Zwischenelemente 56, 58 weisen des Weiteren einen Füllkörper 76, 77 auf, der zwischen der Anlegefläche 60, 62 und der Anlage 64, 66 eingelegt ist. An den Füllkörpern 76, 77, den Anlegeflächen 60, 62 sowie den Anlagen 64, 66 sind jeweils Bohrungen vorgesehen, die eine sich durch das Zwischenelement erstreckende Ausnehmung 78, 79 bilden, durch die sich das Spannelement 30 erstrecken kann. An den Zwischenelementen 56, 58 sind jeweils Laschen 80, 82 vorgesehen, die den Füllkörper 76, 77 in einer Aufnahme 84, 86 des jeweiligen Zwischenelements 56, 58 fixieren.

Beispielsweise kann in der Bohrung eines Füllkörpers 78 ein Innengewinde vorgesehen sein und das Spannelement 30 weist ein korrespondierendes Außengewinde auf, so dass der Füllkörper 77 ein Spannteil 34 bildet. Das zweite Spannteil 32 ist fest mit dem Spannelement 30 verbunden und weist vorzugsweise ein Drehmomentübertragungsprofil auf.

Alternativ kann der Füllkörper 77 auch analog zum Füllkörper 76 lediglich eine Ausnehmung 79 aufweisen, durch die sich das Spannelement 30 erstreckt, und das Spannelement 34 ist ein vom Füllkörper 77 separates Element, das an der Anlage 66 anliegt.

Durch die Spanneinrichtung 28 bzw. die Spannteile 32 werden die Zwischenelemente 56, 58 mit den Anlegeflächen 60, 62 gegen die Spannköpfe 24, 26 gedrückt. Es erfolgt also eine Kraftübertragung von der Spanneinrichtung 28 bzw. den Spannteilen 32 auf die Zwischenelemente 56, 58 und weiter auf die Spannköpfe 24, 26.

Wie in Figur 5 zu sehen ist die Anlegefläche 60, 62 der Zwischenelemente 56, 58 an der in montiertem Zustand am Spannband 12 radial inneren Kante abgerundet und weist einen Vorsprung 88, 90 auf, der in montiertem Zustand in Umfangsrichtung zum Spannkopf 24, 26 vorsteht. An den Spannköpfen 24, 26 ist jeweils eine Vertiefung 92, 94 vorgesehen, in die der Vorsprung 88, 90 eingreifen kann.

Wie in Figur 6 zu sehen ist, liegen die Zwischenelemente 56, 58 lediglich mit den Vorsprüngen 88, 90 an den Spannköpfen 24, 26 an. Das Spannteil 32 liegt flächig an der Anlage 64 an, so dass eine optimale Kraftübertragung gewährleistet ist. Der Anlegepunkt 96, 98, mit dem die Zwischenelemente 56, 58 an den Spannköpfen 24, 26 anliegen, liegt dadurch sehr nah an den Fußpunkten 100, 102 der Spannköpfe, die jeweils den Übergang von den Spannköpfen 24, 26 zum Spannband 12 bilden. Wie in Figur 6 zu sehen ist, liegt der Anlegepunkt 96, 98 in jedem Fall in radialer Richtung des Aufnahmeraums 20 näher am Aufnahmeraum 20 als die Mittelachse 104 des Spannelements 30 bzw. näher am jeweiligen Fußpunkt 100, 102 als die Mittelachse 104 des Spannelements 30. Dadurch wird die Biegebelastung auf die Spannköpfe 24, 26 deutlicher reduziert, so dass eine gleichmäßigere Spannungsverteilung im Spannband 12 erreicht werden kann. Um diesen Effekt zu verstärken, sind die Spannköpfe 24, 26 des Weiteren zueinander geneigt ausgebildet.

Da die Spannköpfe 24, 26 symmetrisch ausgebildet sind, kann die Spanneinrichtung 28 mit einer beliebigen Ausrichtung am Spannband 12 montiert werden. Durch die Zwischenelemente 56, 58 erfolgt zum einen die Festlegung der Anlegepunkte 96, 98. Zum anderen liegen die Spanneinrichtung 28 bzw. die Spannteile 32 flächig an den Zwischenelementen 56, 58 an, so dass eine verbesserte Kräfteübertragung von der Spanneinrichtung 28 auf die Spannköpfe 24, 26 erfolgt.

Eine zweite Ausführungsform der Zwischenelemente 56, 58 ist in den Figuren 7 und 8 gezeigt. Der Aufbau entspricht im Wesentlichen den in den Figuren 5 un6 gezeigten Zwischenelementen 56, 58. Es ist lediglich keine Anlage für die Spanneinrichtung vorgesehen. Das Spannelement 32 liegt somit direkt am Füllkörper 76 an.

Wie in den Figuren 9a bis 9e zu sehen ist, weist die Profilschelle 10 in Umfangsrichtung verschiedene Querschnittsformen auf. Im Bereich der Spannköpfe (Figur 9a) hat die Profilschelle einen im Wesentlichen U-förmigen Querschnitt. Im Übergangsbereich zum Spannband 12 bzw. an den Fußpunkten 100, 102 verändert sich der Querschnitt, so dass dieser im Wesentlichen U-förmig ist, wodurch die Vertiefungen 92, 94 gebildet sind.

Im Bereich des Spannbandes 12 ist der Querschnitt im Wesentlichen U-förmig, wobei die Schenkel 14, 16 in einem Winkel zueinander stehen. Der Winkel nimmt beispielsweise vom Querschnitt C-C bis zum Querschnitt e-e ab. Dies führt bei montierter Profilschelle 10 zu einer gleichmäßigeren Spannungsverteilung innerhalb des Spannbandes 12. Beispielsweise beträgt der Winkel der Schenkel 14, 16 im Schnitt c-c 39,6°, im Schnitt d-d 38,1° und im Schnitt e-e 34,4°. Die Winkel können aber auch andere Werte annehmen, solange eine gleichmäßige Spannungsverteilung im spannband 12 gewährleistet ist. Vorzugsweise beträgt der Winkel zwischen 45 und 30°.

Die Erfindung ist nicht auf eine der vorbeschriebenen Ausführungsformen beschränkt, sondern in vielfältiger Weise abwandelbar. Die Zwischenelemente 56, 58 müssen lediglich so ausgebildet sein, dass der Anlegepunkt 96, 98 zwischen den Zwischenelementen 56, 58 und den Spannköpfen 24, 26 jeweils radial näher am Fußpunkt 100, 102 des jeweiligen Spannkopfes 24, 26 liegt als die Mittelachse 104 des Spannelements 30 und, dass die Anlegeflächen 60, 62 jeweils einen in Umfangsrichtung U vorstehenden Vorsprung 88, 90 aufweisen, wobei der Vorsprung 88, 90 jeweils in radialer Richtung näher am Aufnahmeraum 20 als die Öffnungen 44, 46 des Spannkopfes 24, 26 vorgesehen ist.

Beispielsweise können die Spannköpfe 24, 26 auch einen jeweils unmittelbar an das jeweilige Ende des Spannbandes 20 anschließenden, gegenläufig zur Krümmung des Spannbandes 20 gekrümmten Abschnitt aufweisen, wobei die Anlegepunkte 96, 98 jeweils an diesen gekrümmten Abschnitten der Spannköpfe 24, 26 liegen. Insbesondere ist die Krümmung der gekrümmten Abschnitte größer als eine optional vorhandene Krümmung der Anlegeflächen 60, 62.

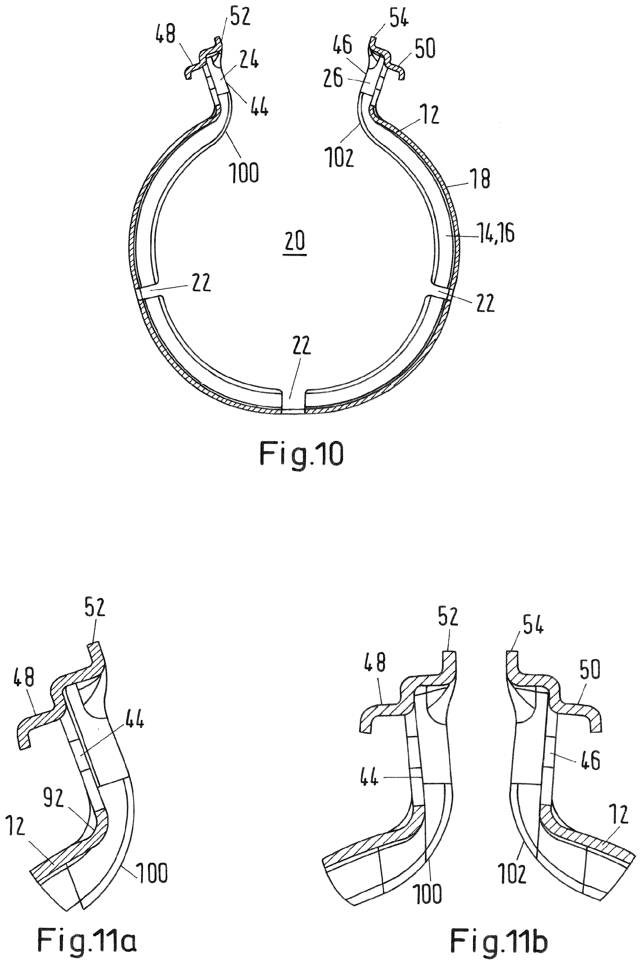

In den Figuren 10 sowie 11a und 11b ist eine zweite Ausführungsform einer Profilschelle gezeigt. Der Aufbau dieser Profilschelle 10 entspricht im Wesentlichen der vorstehend beschriebenen Profilschelle 10. Die Vorsprünge 48, 50 weisen aber keine Rastelemente auf, sondern sind an ihrem Ende jeweils radial nach innen umgebogen. Die umgebogenen Enden bilden ein hakenförmiges Arretiermittel, das ein Abrutschen der Zwischenelemente 56, 58 verhindert.

**Bezugszeichenliste**

| | | | |
|---|---|---|---|
| 10 | Profilschelle | 62 | Anlegefläche |
| 12 | Spannband | 64 | Anlage |
| 14 | Schenkel | 66 | Anlage |
| 16 | Schenkel | 68 | Ausnehmungen |
| 18 | Verbindungsbereich | 70 | Ausnehmungen |
| 20 | Aufnahmeraum | 72 | Rastelemente |
| 22 | Unterbrechungen | 74 | Rastelemente |
| 24 | Spannkopf | 76 | Füllkörper |
| 26 | Spannkopf | 77 | Füllkörper |
| 28 | Spanneinrichtung | 78 | Ausnehmung |
| 30 | Spannelement | 79 | Ausnehmung |
| 32 | Spannteil | 80 | Laschen |
| 34 | Spannteil36 Leitungen | 82 | Laschen |
| 38 | Leitungen | 84 | Aufnahme |
| 40 | Flansch | 86 | Aufnahme |
| 42 | Flansch | 88 | Vorsprung |
| 44 | Öffnung | 90 | Vorsprung |
| 46 | Öffnung | 92 | Vertiefung |
| 48 | Vorsprünge | 94 | Vertiefung |
| 50 | Vorsprünge | 96 | Anlegepunkt |
| 52 | Kontaktfläche | 98 | Anlegepunkte |
| 54 | Kontaktfläche | 100 | Fußpunkt |
| 56 | Zwischenelemente | 102 | Fußpunkt |
| 58 | Zwischenelemente | 104 | Mittelachse |
| 60 | Anlegefläche | | |

## Patentansprüche

1. Profilschelle (10), mit einem Spannband (12) und einer Spanneinrichtung (28), wobei das Spannband (12) an den Enden jeweils einen bezüglich eines von der Profilschelle (10) definierten Aufnahmeraums (20) im Wesentlichen radial abstehenden Spannkopf (24, 26) mit jeweils einer Öffnung (44, 46) aufweist, und wobei die Spanneinrichtung (28) zwei Spannteile (32, 34) sowie ein längliches, die Spannteile (32, 34) verbindendes Spannelement (30) aufweist, wobei sich das Spannelement (30) durch die Öffnungen (44, 46) der Spannköpfe (24, 26) erstreckt und die Spannteile (32, 34) gegen die Spannköpfe (24, 26) drückt, **dadurch gekennzeichnet, dass** die Profilschelle (10) Zwischenelemente (56, 58) aufweist, die zwischen den Spannköpfen (24, 26) und den Spannteilen (32, 34) vorgesehen sind, wobei die Zwischenelemente (56, 58) Ausnehmungen (78, 79) aufweisen, durch die sich das Spannelement (30) erstreckt, sowie eine Anlegefläche (60, 62) zur Anlage an den Spannkopf (24, 26), wobei die Anlegefläche (60, 62) derart ausgebildet ist, dass der Anlegepunkt (96, 98) zwischen dem Zwischenelement (56, 58) und dem Spannkopf (24, 26) zumindest in einer Spannposition, in der die Spannköpfe (24, 26) parallel zueinander oder zueinander geneigt sind, jeweils in radialer Richtung näher am Aufnahmeraum (20) liegt als die Mittelachse (104) des Spannelements (30), und wobei die Anlegeflächen (60, 62) jeweils einen in Umfangsrichtung (U) vorstehenden Vorsprung (88, 90) aufweisen, wobei der Vorsprung (88, 90) jeweils in radialer Richtung näher am Aufnahmeraum (20) als die Öffnungen (44, 46) des Spannkopfes (24, 26) vorgesehen ist.

2. Profilschelle nach Anspruch 1, **dadurch gekennzeichnet, dass** das Spannband (12) um den Aufnahmeraum (20) gekrümmt ist und die Spannköpfe (24, 26) jeweils einen unmittelbar an das jeweilige Ende des Spannbandes (12) anschließenden, gegenläufig zur Krümmung des Spannbandes (12) gekrümmten Abschnitt aufweisen, wobei die Anlegepunkte (96, 98) jeweils am gekrümmten Abschnitt des Spannkopfes (24, 26) liegen.

3. Profilschelle nach einem der Ansprüche 1 und 2, **dadurch gekennzeichnet, dass** die Zwischenelemente (56, 58) jeweils eine abgerundete Anlegefläche (60, 62) aufweisen, wobei die Krümmung der Anlegeflächen (60, 62) insbesondere kleiner ist als die Krümmung der gekrümmten Abschnitte der Spannköpfe (24, 26).

4. Profilschelle nach einem der Ansprüche 1 bis 3, **dadurch gekennzeichnet, dass** an den Zwischenelementen (56, 58) und den Spannköpfen (24, 26) zusammenwirkende Halteelemente (48, 50, 68, 70) vorgesehen sind, die die Zwischenelemente (56, 58) in radialer Richtung und in einer Drehrichtung um die Längsachse des Spannelements (30) festlegen.

5. Profilschelle nach Anspruch 4, **dadurch gekennzeichnet, dass** die Halteelemente (48, 50, 68, 70) jeweils durch zumindest eine Ausnehmung (68, 70) am Zwischenelement (56, 58) oder am Spannkopf (24, 26) und zumindest einen am Spannkopf (24, 26) oder dem Zwischenelement (56, 58) vorgesehenen Vorsprung (48, 50), der in die Ausnehmung (68, 70) ragt, gebildet sind.

6. Profilschelle nach Anspruch 5, **dadurch gekennzeichnet, dass** der Vorsprung (48, 50) aus dem Spannkopf (24, 26) herausgebogen ist.

7. Profilschelle nach einem der vorhergehenden Ansprüche, **dadurch gekennzeichnet, dass** das Zwischenelement (56, 58) eine Aufnahme (84, 86) für einen Füllkörper (76, 77) oder ein Spannteil (32, 34) der Spanneinrichtung (28) aufweist.

8. Profilschelle nach Anspruch 7, **dadurch gekennzeichnet, dass** in einer Aufnahme (86) ein Spannteil (34) mit einem Innengewinde und in der zweiten Aufnahme (84) ein Füllkörper (76) mit einer zylindrischen Ausnehmung vorgesehen ist.

9. Profilschelle nach einem der vorhergehenden Ansprüche, **dadurch gekennzeichnet, dass** die Zwischenelement (56, 58) jeweils eine Anlage (64, 66) für ein Spannteil (32, 34) aufweisen.

10. Profilschelle nach einem der vorhergehenden Ansprüche, **dadurch gekennzeichnet, dass** die Spannköpfe (24, 26) zueinander geneigt ausgebildet sind.

11. Profilschelle nach einem der vorhergehenden Ansprüche, **dadurch gekennzeichnet, dass** an den an radial äußeren Enden der Spannköpfe (24, 26) einander gegenüberliegende Kontaktflächen (52, 54) vorgesehen sind.

## Claims

1. A profiled clamp (10), having a tensioning band (12) and a tensioning device (28), wherein the tensioning band (12) comprises at each end a tensioning head (24, 26), which protrudes radially in a substantial manner with reference to a receiving space (20) which is defined by the profiled clamp (10), said tensioning heads each having an opening (44, 46), and wherein the tensioning device (28) comprises two tensioning parts (32, 34) and one elongated tensioning element (30) which connects the tensioning parts (32, 34), wherein the tensioning element (30) extends through the openings (44, 46) of the tensioning heads (24, 26) and presses the tensioning parts (32, 34) against the tensioning heads (24, 26), **characterized in that** the profiled clamp (10) comprises intermediate elements (56, 58) which are provided between the tensioning heads (24, 26) and the tensioning parts (32, 34), wherein the intermediate elements (56, 58) comprise recesses (78, 79), through which the tensioning element (30) extends, as well as an abutment surface (60, 62) for abutment against the tensioning head (24, 26), wherein the abutment surface (60, 62) is realized in such a manner that the abutment point (96, 98) between the intermediate element (56, 58) and the tensioning head (24, 26), at least in a tensioning position in which the tensioning heads (24, 26) are parallel to one another or are angled with respect to one another, is located in each case closer in the radial direction to the receiving space (20) than the center axis (104) of the tensioning element (30) and wherein the abutment surfaces (60, 62) each comprise a projection (88, 90) which protrudes in the circumferential direction (U), wherein the projection (88, 90) is provided in each case closer in the radial direction to the receiving space (20) than the openings (44, 46) of the tensioning head (24, 26).

2. The profiled clamp as claimed in claim 1, **characterized in that** the tensioning band (12) is curved about the receiving space (20) and the tensioning heads (24, 26) each comprise a portion which connects directly to the respective end of the tensioning band (20) and is curved in the opposite direction to the curvature of the tensioning band (12), wherein the abutment points (96, 98) are each located on the curved portion of the tensioning head (24, 26).

3. The profiled clamp as claimed in either of claims 1 and 2, **characterized in that** the intermediate elements (56, 58) each comprise a rounded abutment surface (60, 62), wherein the curvature of the abutment surfaces (60, 62) is in particular smaller than the curvature of the curved portions of the tensioning heads (24, 26).

4. The profiled clamp as claimed in one of claims 1 to 3, **characterized in that** interacting holding elements (48, 50, 68, 70), which fix the intermediate elements (56, 58) in the radial direction and in a rotational direction about the longitudinal axis of the tensioning element (30), are provided on the intermediate elements (56, 58) and the tensioning heads (24, 26).

5. The profiled clamp as claimed in claim 4, **characterized in that** the holding elements (48, 50, 68, 70) are each formed by at least one recess (68, 70) on the intermediate element (56, 58) or on the tensioning head (24, 26) and at least one projection (48, 50) which is provided on the tensioning head (24, 26) or the intermediate element (56, 58) (48, 50) and protrudes into the recess (68, 70).

6. The profiled clamp as claimed in claim 5, **characterized in that** the projection (48, 50) is bent from the tensioning head (24, 26).

7. The profiled clamp as claimed in one of the preceding claims, **characterized in that** the intermediate element (56, 58) comprises a reception (84, 86) for a filler (76, 77) or a tensioning part (32, 34) of the tensioning device (28).

8. The profiled clamp as claimed in claim 7, **characterized in that** a tensioning part (34) with an internal thread is provided in a reception (86) and a filler (76) with a cylindrical recess is provided in the second reception (84).

9. The profiled clamp as claimed in one of the preceding claims, **characterized in that** the intermediate elements (56, 58) each comprise an abutment (64, 66) for a tensioning part (32, 34).

10. The profiled clamp as claimed in one of the preceding claims, **characterized in that** the tensioning heads (24, 26) are realized at an angle with respect to one another.

11. The profiled clamp as claimed in one of the preceding claims, **characterized in that** mutually opposite contact surfaces (52, 54) are provided on the radially outer ends of the tensioning heads (24, 26).

## Revendications

1. Collier de serrage du profil (10), comprenant une bande de serrage (12) et un dispositif de serrage (28), la bande de serrage (12) présentant à chacune de ses extrémités une tête de serrage (24, 26) qui fait saillie essentiellement radialement par rapport à un espace de réception (20) défini par le collier de serrage du profil (10) et présente à chaque fois une ouverture (44, 46), et le dispositif de serrage (28) présentant deux pièces de serrage (32, 34) et un élément de serrage allongé (30) reliant les pièces de serrage (32, 34), l'élément de serrage (30) s'étendant à travers les ouvertures (44, 46) des têtes de serrage (24, 26) et pressant les pièces de serrage (32, 34) contre les têtes de serrage (24, 26), **caractérisé en ce que** le collier de serrage du profil (10) présente des éléments intermédiaires (56, 58) qui sont prévus entre les têtes de serrage (24, 26) et les pièces de serrage (32, 34), les éléments intermédiaires (56, 58) présentant des évidements (78, 79) à travers lesquels s'étend l'élément de serrage (30), ainsi qu'une surface d'appui (60, 62) pour l'appui sur la tête de serrage (24, 26), la surface d'appui (60, 62) étant conçue de telle sorte que le point d'appui (96, 98) entre l'élément intermédiaire (56, 58) et la tête de serrage (24, 26) est plus proche de la surface d'appui (60, 62) au moins dans une position de serrage dans laquelle les têtes de serrage (24, 26) sont parallèles ou inclinées l'une par rapport à l'autre, est à chaque fois plus proche en direction radiale de l'espace de réception (20) que l'axe central (104) de l'élément de serrage (30), et les surfaces de contact (60, 62) présentent à chaque fois une saillie (88, 90) faisant saillie dans la direction périphérique (U), la saillie (88, 90) étant à chaque fois prévue plus proche en direction radiale de l'espace de réception (20) que les ouvertures (44, 46) de la tête de serrage (24, 26).

2. Collier de serrage du profil selon la revendication 1, **caractérisée en ce que** la bande de serrage (12) est incurvée autour de l'espace de réception (20) et les têtes de serrage (24, 26) présentent chacune une section directement adjacente à l'extrémité respective de la bande de serrage (12) et incurvée dans la direction opposée à la courbure de la bande de serrage (12), les points de contact (96, 98) se trouvant chacun sur la section incurvée de la tête de serrage (24, 26).

3. Collier de serrage du profil selon l'une des revendications 1 et 2, **caractérisée en ce que** les éléments intermédiaires (56, 58) présentent chacun une surface de contact arrondie (60, 62), la courbure des surfaces de contact (60, 62) étant notamment inférieure à la courbure des parties incurvées des têtes de serrage (24, 26).

4. Collier de serrage du profil selon l'une quelconque des revendications 1 à 3, **caractérisée en ce que** des éléments de retenue coopérants (48, 50, 68, 70) sont prévus sur les éléments intermédiaires (56, 58) et les têtes de serrage (24, 26), lesquels éléments de retenue (48, 50, 68, 70) fixent les éléments intermédiaires (56, 58) dans la direction radiale et dans un sens de rotation autour de l'axe longitudinal de l'élément de serrage (30).

5. Collier de serrage du profil selon la revendication 4, **caractérisé en ce que** les éléments de retenue (48, 50, 68, 70) sont formés chacun par au moins un évidement (68, 70) sur l'élément intermédiaire (56, 58) ou sur la tête de serrage (24, 26) et au moins une saillie (48, 50) qui est prévue sur la tête de serrage (24, 26) ou sur l'élément intermédiaire (56, 58) et qui fait saillie dans l'évidement (68, 70).

6. Collier de serrage du profil selon la revendication 5, **caractérisée en ce que** la saillie (48, 50) est pliée hors de la tête de serrage (24, 26).

7. Collier de serrage du profil selon l'une des revendications précédentes, **caractérisé en ce que** l'élément intermédiaire (56, 58) présente un logement (84, 86) pour une charge (76, 77) ou une pièce de serrage (32, 34) du dispositif de serrage (28).

8. Collier de serrage du profil selon la revendication 7, **caractérisé en ce qu'**une pièce de serrage (34) avec un filetage interne est prévue dans un premier réceptacle (86) et un corps de remplissage (76) avec un évidement cylindrique est prévu dans le second réceptacle (84).

9. Collier de serrage du profil selon l'une des revendications précédentes, **caractérisée en ce que** les éléments intermédiaires (56, 58) présentent chacun une butée (64, 66) pour une pièce de serrage (32, 34).

10. Collier de serrage du profil selon l'une des revendications précédentes, **caractérisée en ce que** les têtes de serrage (24, 26) sont conçues pour être inclinées l'une par rapport à l'autre.

11. Collier de serrage du profil selon l'une des revendications précédentes, **caractérisée en ce que** des surfaces de contact (52, 54) opposées l'une à l'autre sont prévues aux extrémités radialement extérieures des têtes de serrage (24, 26).
